Europäisches Patentamt

(19) European Patent Office

Office européen des brevets

(11) Publication number: 0 218 004 B1

(12) EUROPEAN PATENT SPECIFICATION

(45) Date of publication of patent specification: 07.08.91 (51) Int. Cl.⁵: C01B 33/148

(21) Application number: 86105932.7

(22) Date of filing: 30.04.86

(54) A purification process of silica.

(30) Priority: 08.10.85 JP 222628/85

(43) Date of publication of application:
15.04.87 Bulletin 87/16

(45) Publication of the grant of the patent:
07.08.91 Bulletin 91/32

(84) Designated Contracting States:
DE

(56) References cited:
DE-A- 2 805 547
FR-A- 2 178 870
US-A- 3 959 174
US-A- 4 401 638

PATENT ABSTRACTS OF JAPAN, vol. 7, no.
232 (C-190)[1377], 14th October 1983; & JP -
A - 58 125 609 (FUJI DEIBUISON KAGAKU
K.K.) 26-07-1983

(73) Proprietor: KAWATETSU MINING COMPANY,
LTD.
4-1, Shiba-koen 2-chome Minato-ku
Tokyo 105(JP)

(72) Inventor: Seki, Akira
1-19 Shintakane 3-chome
Funabashi-shi Chiba-ken(JP)
Inventor: Narita, Yuuki
14-7 Yakuendai 1-chome
Funabashi-shi Chiba-ken(JP)
Inventor: Aso, Yoshio
15-6 Inagehigashi 5-chome
Chiba-shi Chiba-ken(JP)
Inventor: Nagata, Shunro
15-3 Sengoku 1-chome
Bunkyo-ku Tokyo(JP)

(74) Representative: Kraus, Walter, Dr. et al
Patentanwälte Kraus, Weisert & Partner
Thomas-Wimmer-Ring 15
W-8000 München 22(DE)

## Description

This invention is directed to a purification process of silica. More particularly, this invention is directed to a process for purifying a silica material which results from an alkali silicate solution and which usually contains more than 200 ppm of impurities in order to get a product containing less than 30 ppm of impurities. Recently, as silica has been increasingly used as functional, optical and electronic materials, such demands on silica made with respect to purity, shape, size, physical properties have almost become impossible to be met with natural silica only. Hence, several kinds of artificial silica are produced by various processes and supplied for each different purpose.

Generally, artifical silica is divided into two types having different purity. Silica gel and fine powder silica, which are produced from alkali silicate by way of silica gel by rinsing in water and drying, have low purity;

whereas fused silica glass, produced by the direct melting of natural quartz such as high purity silica, siliceous sand and quartz crystal, artificial silica glass, obtained from silicon tetrachloride, and artificial quartz crystal have high purity. So far there have been reported many production process of high purity silica, a purification process of dried silica gel using a mineral acid being preferred. With this purification process, however, only impurities outside the silica gel particles are removed because the particles are in a stabilized condition as they contain impurities inside. Therefore, in spite of being called high-purity silica, it contains as much as about 200 ppm of impurities even after the purification.

DE-A-2 805 547 describes a process for the production of silica gels, silica xerogels or silicate solution having very small amounts of impurities of iron, aluminum, arsenic and lead, which is characterized in that gel particles prepared in known manner are treated with hydrochloric acid which may contain an agent for chemically binding the impurities, washed with water and optionally dissolved in solution reacting in an alkaline manner. This process comprises repeated treatments at temperatures up to $70^\circ$ C.

As stated above, silica gel and fine powder silica are not very pure; those ones produced by conventional processes contain about 200 ppm of Al, 50 ppm of Fe and 100 ppm of other foreign elements as impurities. Although such silica products are suitable for catalysts or fillers their use is restricted in case that high-purity materials having specified physical or chemical properties are desired. In the case of fused silica glass it is possible to cut down its production costs comparatively easily because the natural product is just melted as it is after simply rinsing with water and acid. However, it is not possible by this procedure to easily reduce the contents of impurities.

In this respect, fused silica glass produced by a conventional process by and large contains about 30 ppm of Al, 2 ppm of Fe, 3 ppm of Ti, 3 ppm of Mg, 1 ppm of K, 1 ppb of U and 1 ppb of Th. Therefore, if it is used as a filler in need of high purity, the above contaminating elements dissolve out therefrom and chemically affect the result of determinations. If this is put to optical use, the optical properties of the instrument are affected because the impurities have their own absorption bands. Moreover, if this is used as a material for semi-conductors, alpha-ray originating from such radioactive elements as uranium and thorium make a cause of arising haphazard errors in the software of programmed, controlled systems.

Incidentally, artificial silica glass, purer than fused silica glass, is produced from silicon tetrachloride which a by-product in the production process of high purity silicon for semi-conductors. Therefore, the content of each foreign element is more or less 1 ppm and below: particularly in terms of uranium and thorium, their content is as small as 1 ppb or less. Hence, artificial silica glass is very expensive; it can certainly be put to special use, but cannot be put to general use.

Accordingly, it is the object of this invention to provide a purification process of high purity silica, which may be used as a material for cheap and high purity silica glass.

According to the present invention this object is obtained by a purification process of silica which is characterized by the following steps:

(a) silica gel obtained from an aqueous alkali silicate solution, containing a considerable amount of impurities, is dispersed in water and filtered off;

(b) said silica gel is dispersed again in an aqueous solution of pH 2 or less and filtered off;

(c) it is subjected to a separate heat-treatment at a temperature of $500^\circ$ C to $1100^\circ$ C and an acid-treatment with stirring in order to break siloxane links inside said silica gel and dissolve out impurities therefrom and then filtered off; and

(d) the cake thus produced is rinsed with pure water to remove the residual acid solution and dried.

The structure of silica comprises a three-dimensional combination of siloxane links Si-O-Si and silanol links Si-OH. The present invention is based upon the finding that, as long as silica gel is used as a material, if as many impurities as possible are removed and the siloxane links are weakened in the pre-treatment comprising a few steps, then the following heat-treatment and acid-treatment with continuous stirring facilitate the removal of impurities from the inside of silica gel because the siloxane links, as well as the silica gel itself, are easily broken in the post-treatment.

Preferably, in the process of the present invention in step (a) a silica gel is used which is obtained from an aqueous alkali silicate solution which in turn is prepared by adding an alkali metal to silicon dioxide having a purity of not less than 99 %. Said silicon dioxide has been obtained from a lower grade silicon dioxide having a purity of about 80 % by rinsing with water, flotation and acid treatment. Then, the resulting mixture is heated and water is thereto.

Silica gel can be obtained by the aqueous alkali silicate produced as described above by the addition of a mineral acid to acidify it to a pH of 6 and above and to cause precipitation.

Commonly, silica gel obtained from aqueous alkali silicate solutions contains as impurities Na, K. Ca, Mg, Mn, etc., other than Al, Fe, Ti referred to above. When these foreign elements are present outside or inside silica gel, other impurities are hindered from dissolving out therefrom in the impurity-removing process thereafter where the pH of the solution is lowered to 2 or less. It is therefore necessary to rinse silica gel with a solution with a pH from about neutrality through 9 in order to allow said Na, K, Ca, Mg, Mn, etc., to maintain the ion form therein. The resulting product is filtered and after filtration, water is added to the silica gel with stirring in order to disperse it and convert it to a slurry having a sufficient fluidity. The addition of mineral acids to the slurry thereafter does not only help impurities outside the silica gel to dissolve out but also serves to break the siloxane links near the surface, with the result that it facilitates the removal of impurities inside the silica gel. On account of this, it is desirable to add as much mineral acid as lowering pH to 2 or less so that as many impurities as possible can dissolve out in the form of ions. But to assure their more rapid dissolution and prompt the breaking of more of the siloxane links, it is more desirable that the pH of the slurry be not above 1.20.

After the removal of impurities, the silica gel is rinsed and filtered sufficiently. If a trace of impurities' ion remain outside the silica gel, not only does its purity decrease as much but also its surface becomes so stable as to prevent impurities from dissolving out and hinder mineral acid from permeating its inside in the acid-treatment thereafter since impurities are prone to form the compound $SiO_2 \cdot M^a O_b$ (B = 0.5 a) on the surface in the subsequent heat-treatment.

In the heat-treatment and the acid-treatment of this invention, at first the silanol links outside the silica gel break, whereby its surface is activated. At the same time, water contained inside begins to evaporate. Subsequently, an acid solution rapidly penetrates the voids by stirring the water and the silanol links have left as they evaporate, which causes more portion of both the silica gel and the siloxane links inside to break, whereby impurities dissolve out from the inside and outside of the silica gel simultaneously.

The heat-treatment is carried out between 500 and 1100° C. It is undesirable that the heat-treatment is conducted above 1100° C because in such a case the silica gel particles are sintered. Silica gel treated with mineral acid has to be rinsed and filtered carefully with pure water in order to dissolve impurities and the mineral acid not to cling to or keep staying on it. The silica gel is finally dried above ambient temperatures and makes a high purity silica.

Example

To 150 1 of water 2.7 kg of sodium silicate aqueous solution (37 % $SiO_2$) were added. Then 1.2 l of 36 % hydrochloric acid were added to the solution to make its pH 7.80. After standing for 5 hours and then filtering, 50 kg of silica gel were obtained which contained 2.0 % of silicon dioxide.

Fifty liters of water were added to the silica gel with stirring and then 700 ml of HCl were added to make the pH of the silica gel solution 1.10. The acid gel slurry formed. It was filtered, rinsed with water and filtered again. At this moment the product contained 2.5 % of silicon dioxide. It was kept standing in an electric furnace at 500° C for 18 hours and put in 5 l of water. 1 l of HCl was added thereto. Rinsing and filtering with pure water were conducted. Finally, drying was made at 120° C. In this way, high purity silica was obtained. Foreign elements found in the silica are shown below together with their content.

| Al | Fe | Ti | K | Na | Ca | Mg | |
|---|---|---|---|---|---|---|---|
| 15 | <1 | 3 | <1 | <1 | <1 | <1 | (ppm) |

| U | Th | |
|---|---|---|
| <0.5 | <0.5 | (ppb) |

As is apparent from the above, according to this invention, silica containing more than 200 ppm of impurities can easily and economically be refined to a high purity one containing less than 30 ppm of impurities. The high purity silica is expected to meet a variety of demands as to highly pure physical or chemical properties in the fields such as optics, electronics or high functional catalytic reactions. The silica is also able to be used as cheap, high purity silica glass.

## Claims

1. A purification process of silica, characterized by the following steps:
    (a) silica gel obtained from an aqueous alkali silicate solution, containing a considerable amount of impurities, is dispersed in water and filtered off;
    (b) said silica gel is dispersed again in an aqueous solution of pH 2 or less and filtered off;
    (c) it is subjected to a separate heat-treatment at a temperature of 500°C to 1100°C and an acid-treatment with stirring in order to break siloxane links inside said silica gel and dissolve out impurities therefrom and then filtered off; and
    (d) the cake thus produced is rinsed with pure water to remove the residual acid solution and dried.

## Revendications

1. Un procédé de purification de la silice, caractérisé par les étapes suivantes :
    a) on disperse dans l'eau un gel de silice obtenu à partir d'une solution aqueuse de silicate alcalin contenant une quantité considérable d'impuretés et on le sépare par filtration ;
    b) on redisperse ledit gel de silice dans une solution aqueuse à pH 2 ou moins et on le sépare par filtration ;
    c) on le soumet à un traitement thermique séparé à une température de 500 à 1 100°C et à un traitement par un acide en agitant pour briser les liaisons siloxane à l'intérieur dudit gel de silice et pour en extraire les impuretés par dissolution et on le sépare à nouveau par filtration ; et
    d) on rince à l'eau pure le tourteau ainsi produit pour séparer la solution d'acide résiduelle et on le sèche.

## Patentansprüche

1. Reinigungsverfahren für Siliziumdioxid, **gekennzeichnet** durch die folgenden Stufen:
    (a) Siliziumdioxidgel bzw. Kieselsäuregel, das aus einer wäßrigen Alkalisilicatlösung erhalten worden ist, das eine beachtliche Menge Verunreinigungen enthält, wird in Wasser dispergiert und abfiltriert;
    (b) das Siliziumdioxidgel bzw. Kieselsäuregel wird wieder in einer wäßrigen Lösung mit einem pH-Wert von 2 oder darunter dispergiert und abfiltriert;
    (c) es wird einer getrennten Wärmebehandlung bei einer Temperatur von 500 bis 1100°C und einer Säurebehandlung unter Rühren zur Aufspaltung der Siloxanbindungen im inneren des Siliziumdioxidgels bzw. Kieselsäuregels und zum Herauslösen der Verunreinigungen daraus unterworfen und dann abfiltriert; und
    (d) der so gebildete Kuchen wird mit reinem Wasser zur Entfernung der restlichen Säurelösung gewaschen und getrocknet.